# EUROPEAN PATENT SPECIFICATION

(11) **EP 2 394 728 B1**
(45) Date of publication and mention of the grant of the patent: **16.01.2013**
(21) Application number: 11168910.5
(22) Date of filing: 07.06.2011
(51) Int. Cl.: B01D 46/00

(54) **Electrical apparatus and projection display device with particle filter**
Elektrische Vorrichtung und Projektionsanzeigevorrichtung mit Partikelfilter
Appareil électrique et dispositif d'affichage de projection avec un filtre à particules

(30) Priority: 08.06.2010 JP 2010130725
(43) Date of publication of application: 14.12.2011
(73) Proprietor: Sanyo Electric Co., Ltd., Moriguchi-shi Osaka, 570-8677 (JP)
(72) Inventor: Kotani, Kazunori, Moriguchi-shi, Osaka 5708677 (JP)
(74) Representative: Glawe, Delfs, Moll

(56) References cited:
- EP-A2- 2 368 733
- WO-A1-2009/066843
- DE-A1- 2 110 234
- DE-A1- 19 713 747
- GB-A- 2 360 471
- JP-A- 6 091 096
- JP-A- 2006 073 919

## Description

### BACKGROUND OF THE INVENTION

### 1. Field of the Invention

The present invention relates to an electrical apparatus incorporated with a filter according to the preamble of claim 1, and a projection display device incorporated with a filter.

### 2. Disclosure of Related Art

An apparatus of the art is known from EP 2 368 733 A2.

Generally, an electrical apparatus such as a projector, an air conditioner, and an air cleaner for drawing external air into the apparatus is incorporated with a filter which is detachably attached to an air inlet to remove unwanted matter (such as dust and fume) contained in the external air.

If unwanted matter that cannot pass through a filter adheres to an air intake surface of the filter, the filter may eventually be clogged. If the filter is clogged, it is impossible to properly draw air into the apparatus body. The user is required to clean the filter to remove the adhered unwanted matter.

Cleaning the filter is cumbersome to the user. In view of this, the electrical apparatus may be provided with a removing device for automatically removing unwanted matter adhered to the filter to reduce the load of the user. For instance, the removing device may be configured such that a rotary brush is moved over the air intake surface of the filter to scrape off the adhered unwanted matter.

As described above, in the case where the electrical apparatus is configured to automatically clean the filter, there is proposed an idea of cleaning the filter while running the electrical apparatus to prevent lowering of the operation efficiency of the electrical apparatus.

In the above configuration, however, since an attraction force by an air intake operation is continued to be exerted on the filter, it may be difficult to remove adhered unwanted matter from the filter. As a result, removal of unwanted matter by the removing device may not be satisfactorily performed.

### SUMMARY OF THE INVENTION

An electrical apparatus according to a first aspect of the invention includes an air intake device which draws air into an apparatus body; a controller which controls the air intake device; a filter which removes unwanted matter from the air drawn into the apparatus body; and a removing device which removes the unwanted matter adhered to the filter. In this arrangement, the controller controls the air intake device to lower an air intake rate of the filter when the removing device is operated.

For instance, the air intake device may include an intake fan. In this arrangement, the controller controls the air intake device to lower the rotation number of the intake fan when the removing device is operated.

In the electrical apparatus according to the first aspect of the invention, since an attraction force exerted on the filter is reduced in operating the removing device, it is easy to remove the unwanted matter from the filter. Thus, it is possible to satisfactorily remove the unwanted matter from the filter by the removing device.

Preferably, the air intake device may be configured to supply the drawn air to a heat generating member disposed in the apparatus body to cool the heat generating member.

With the above arrangement, since an air intake operation is continued although the air intake rate is lowered, and cooling of the heat generating member is continued, it is possible to suppress overheating of the heat generating member.

According to the invention the controller is configured to control the air intake device to increase the air intake rate into the apparatus body to be larger than the air intake rate before the operation of the removing device is started, after the operation of the removing device is completed.

For instance, in the case where the air intake device includes an intake fan, the controller controls the air intake device to increase the rotation number of the intake fan to be larger than the rotation number before the operation of the removing device is started, after the operation of the removing device is completed.

With the above arrangement, although the temperature of the heat generating member may be increased because the air intake rate is lowered when the removing device is operated, the air intake rate is increased to be larger than the air intake rate before the operation of the removing device is started, after the operation of the removing device is completed. This enables to quickly cool the heat generating member whose temperature has been increased.

A projection display device according to a second aspect of the invention includes an air intake device according to claim 1 which draws air into an apparatus body; a controller which controls the air intake device; a filter which removes unwanted matter from the air drawn into the apparatus body; and a removing device which removes the unwanted matter adhered to the filter. In this arrangement, the controller controls the air intake device to lower an air intake rate of the filter when the removing device is operated.

In the projection display device according to the second aspect of the invention, similarly to the first aspect, it is possible to satisfactorily remove dust and the like adhered to the filter by the removing device.

### BRIEF DESCRIPTION OF THE DRAWINGS

These and other objects, and novel features of the present invention will become more apparent upon reading the following detailed description of the embodiment along with the accompanying drawings.
FIGS. 1A and 1B are external perspective views showing an arrangement of a projector embodying the invention.
FIG. 2 is a diagram showing an arrangement of an optical engine in the embodiment.
FIG. 3 is a diagram showing an arrangement of an inner cover and a cleaning mechanism in the embodiment.
FIGS. 4A and 4B are diagrams showing an arrangement of the inner cover and the cleaning mechanism in the embodiment.
FIG. 5 is a block diagram showing a configuration of the projector embodying the invention.
FIGS. 6A and 6B are diagrams for describing automatic cleaning control of a filter in the embodiment.
FIGS. 7A and 7B are diagrams for describing automatic cleaning control of a filter as a modification of the embodiment.

The drawings are provided mainly for describing the present invention, and do not limit the scope of the present invention.

### DESCRIPTION OF PREFERRED EMBODIMENTS

In the following, an embodiment of the invention is described referring to the drawings.

In the embodiment, liquid crystal panels 203, 204, 205 correspond to a "heat generating member" in the claims. An imager unit 15 corresponds to an "imager" in the claims. A cleaning mechanism 50 corresponds to a "removing device" in the claims. A panel cooling fan 61 corresponds to an "air intake device" and an "intake fan" in the claims. The description regarding the correspondence between the claims and the embodiment is merely an example, and the claims are not limited by the description of the embodiment.

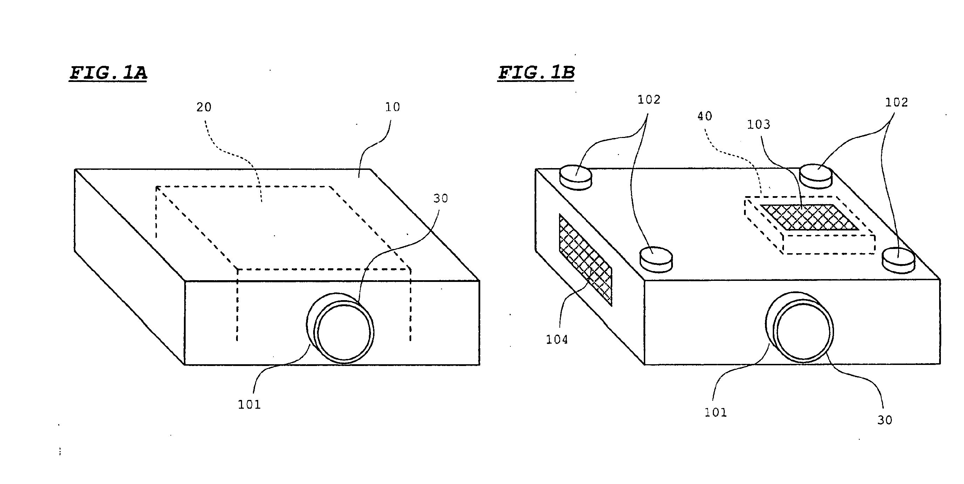

FIGS. 1A and 1B are external perspective views showing an arrangement of a projector. FIG. 1A is a perspective view of the projector when viewed obliquely from above, and FIG. 1B is a perspective view of the projector when viewed obliquely from above in an upside down state.

Referring to FIGS. 1A and 1B, the projector is provided with a cabinet 10 having a substantially rectangular parallelepiped shape with a large size in horizontal direction thereof. The cabinet 10 is formed with a projection window 101 in the middle on a front surface thereof. Further, leg portions 102 are formed at four corners on a bottom surface of the cabinet 10, and an air inlet 103 constituted of multitudes of holes is formed in a position close to a left surface of the cabinet 10. Further, an air outlet 104 constituted of multitudes of holes is formed in a right surface of the cabinet 10.

An optical engine 20 and a projection lens 30 are disposed in the cabinet 10. The optical engine 20 modulates light from a lamp based on an image signal to thereby generate image light. The projection lens 30 is mounted on the optical engine 20, and a front end of the projection lens 30 is exposed forwardly through the projection window 101. The projection lens 30 enlarges and projects the image light generated in the optical engine 20 onto a screen disposed in front of the projector.

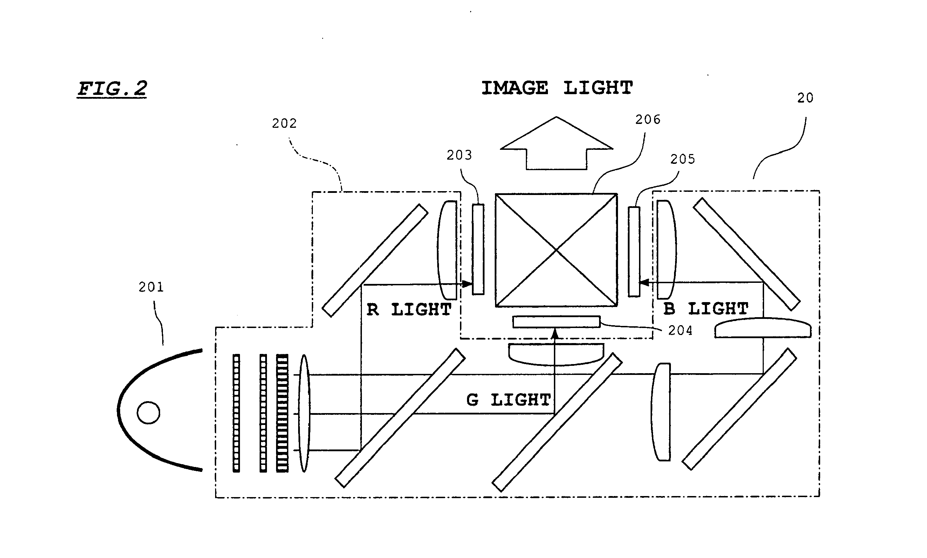

FIG. 2 is a diagram showing an arrangement of the optical engine 20.

As shown in FIG. 2, the optical engine 20 is provided with a lamp 201, a light guiding optical system 202, three transmissive liquid crystal panels 203, 204, 205, and a dichroic prism 206. Unillustrated polarizers are disposed on the incident side and the output side of each of the liquid crystal panels 203, 204, 205.

The lamp 201 is e.g. a metal halide lamp or a xenon lamp. White light emitted from the lamp 201 is separated into light (hereinafter, called as R light) in a red wavelength region, light (hereinafter, called as G light) in a green wavelength region, and light (hereinafter, called as B light) in a blue wavelength region by the light guiding optical system 202. The separated R light, G light, and B light are respectively irradiated onto the liquid crystal panels 203, 204, 205. The R light, G light, B light modulated by the liquid crystal panels 203, 204, 205 are combined by the dichroic prism 206, and the combined light is outputted from the dichroic prism 206 as image light.

An imager constituting the optical engine 20 may be a reflective liquid crystal panel or an MEMS device, in place of the transmissive liquid crystal panels 203, 204, 205. Further alternatively, the optical engine 20 may be an optical system other than the three-panel optical system incorporated with three imagers as described above. For instance, the optical engine 20 may be constituted of a single-panel optical system incorporated with one imager and a color wheel.

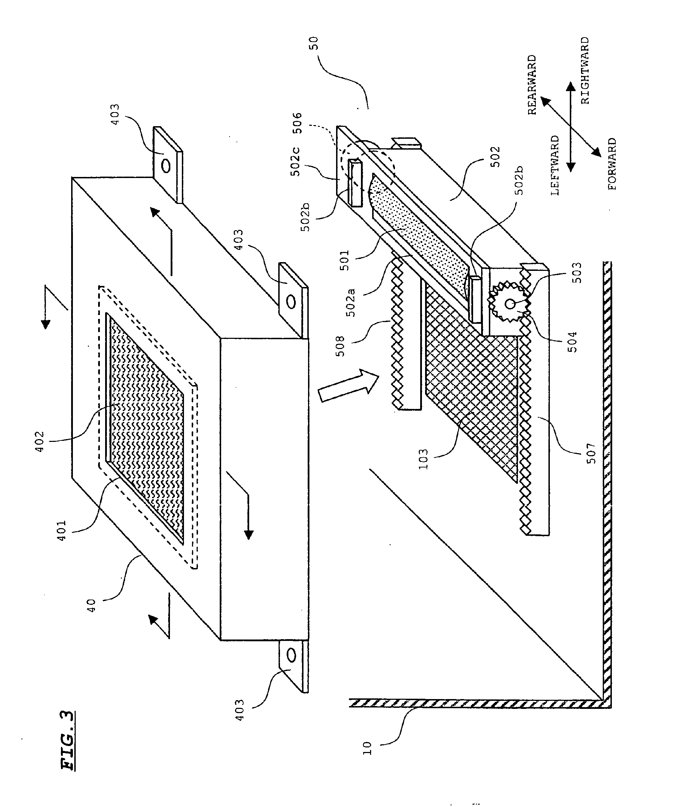

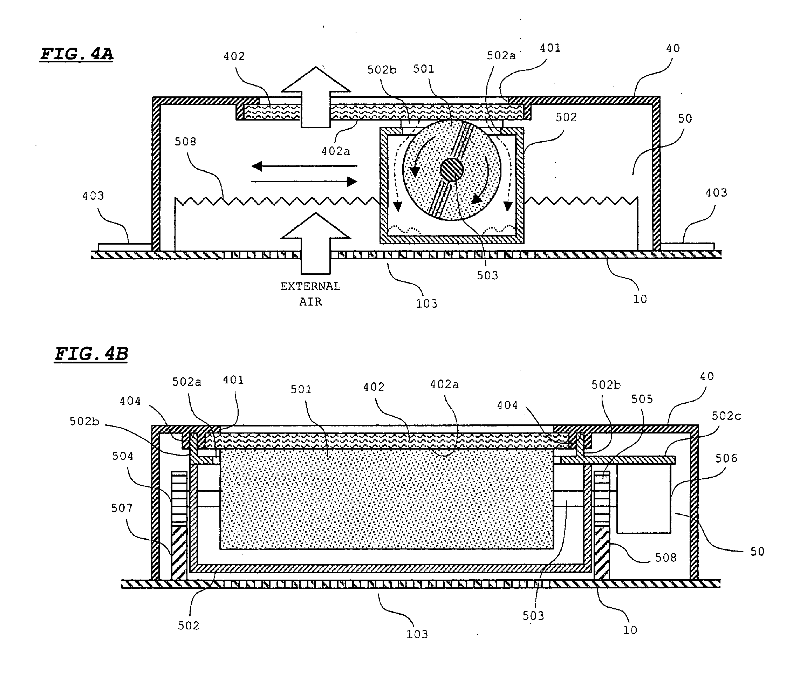

Referring back to FIGS. 1A and 1B, an inner cover 40 for covering the air inlet 103 from the inside is mounted in the cabinet 10. A cleaning mechanism 50 (shown in FIG. 3, FIG. 4A and 4B) is provided in the inside of the inner cover 40.

FIG. 3, FIG. 4A and 4B are diagram showing an arrangement of the inner cover 40 and the cleaning mechanism 50. FIG. 3 is a perspective view of the inner cover 40 and the cleaning mechanism 50 before the inner cover 40 is mounted on the bottom surface of the cabinet 10. FIG. 4A is an elevational cross-sectional view along leftward and rightward directions, when viewed from a front side, showing a state that the inner cover 40 is mounted on the cabinet 10. Further, FIG. 4B is an elevational cross-sectional view along forward and rearward directions, when viewed from a right side, showing a state that the inner cover 40 is mounted on the cabinet 10.

Referring to FIG. 3, FIG. 4A and FIG. 4B, an upper surface of the inner cover 40 is formed with an intake port 401. Further, a filter 402 is detachably attached to a back surface of the upper surface of the inner cover 40 in such a manner as to cover the intake port 401. The filter 402 is formed by e.g. knitting a yarn made of a resin in mesh form. Alternatively, the filter 402 may be made of polyurethane or non-woven fabric. The inner cover 40 is fixedly attached to the bottom surface of the cabinet 10 by screw-fastening attachment portions 403 formed at four corners of the inner cover 40 in bosses (not shown) formed on the bottom surface of the cabinet 10.

As shown in FIG. 4A, when each of cooing fans to be described later is rotated, external air is drawn into the projector through the air inlet 103. The drawn air flows into the cabinet 10 through the intake port 401 via the filter 402. At the air intake operation, dust and fume contained in the air that could not pass through the filter 402 are adhered to an air intake surface 402a of the filter 402.

The cleaning mechanism 50 is provided in the inside of the inner cover 40 to remove dust adhered to the air intake surface 402a of the filter 402.

The cleaning mechanism 50 has a tubular rotary brush 501. The rotary brush 501 is rotatably supported by a shaft 503 in a dust container 502. An opening 502a is formed in an upper surface of the dust container 502. A part of the rotary brush 501 is exposed upward through the opening 502a. Further, guide pieces 502b project forward and rearward from the opening 502a formed in the upper surface of the dust container 502.

Gears 504, 505 are respectively attached to a front end and a rear end of the shaft 503 projecting from the dust container 502. The rear end of the shaft 503 is linked to a motor 506. The motor 506 is fixedly attached to an attachment plate 502c extending rearward from the upper surface of the dust container 502 by an unullustrated attachment bracket.

Racks 507, 508 extend along leftward and rightward directions at a forward position and a rearward position of the air inlet 103. The gears 504, 505 are respectively engaged with the racks 507, 508. Further, as shown in FIG. 4B, two guide grooves 404 are formed along leftward and rightward directions with the filter 402 being interposed therebetween in the inner cover 40. When the inner cover 40 is mounted in the cabinet 10, the guide pieces 502b are received in the guide grooves 404.

With the above arrangement, when the motor 506 is driven, and the shaft 503 is rotated counterclockwise in FIG. 4A in a state that the rotary brush 501 is disposed at a right end of the racks 507, 508, the rotary brush 501 is moved leftward together with the dust container 502 while being rotated counterclockwise. Further, when the rotary brush 501 reaches a left end of the racks 507, 508, the motor 506 is driven in reverse direction, and the shaft 503 is rotated clockwise in FIG. 4A. Then, the rotary brush 501 is moved rightward together with the dust container 502, while being rotated clockwise. A distal end (an outer surface) of the rotary brush 501 is configured to be contacted with the air intake surface 402a of the filter 402. When the rotary brush 501 reciprocates leftward and rightward, dust adhered to the filter 402 is scraped off by the distal end of the rotary brush 501. The scraped dust is collected in the dust container 502, and is accumulated on a bottom portion of the dust container 502, as shown by the one-dotted chain line in FIG. 4A.

A power line (not shown) for supplying electric power to the motor 506 is connected to the motor 506, with such a structure as to be movable leftward and rightward together with the motor 506.

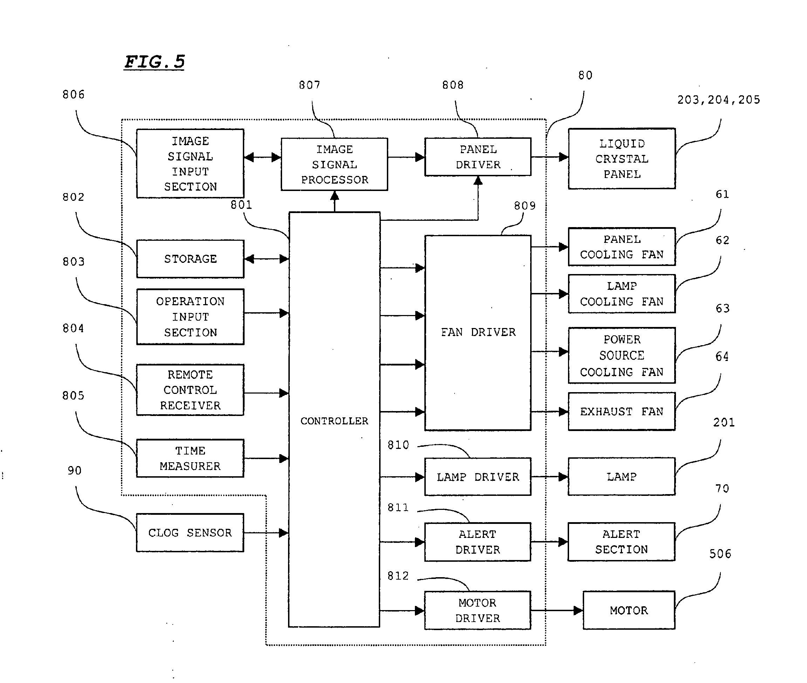

FIG. 5 is a block diagram showing a configuration of the projector.

The projector is provided with three cooling fans i.e. a panel cooling fan 61, a lamp cooling fan 62 and a power source cooling fan 63, and is further provided with an exhaust fan 64, an alert section 70, a control circuit section 80, and a clog sensor 90, in addition to the aforementioned elements.

The panel cooling fan 61 is disposed in a fan casing (not shown) communicating with the intake port 401 formed in the inner cover 40, and is operable to eject air drawn through the intake port 401 through an eject port (not shown) formed in the vicinity of each of the liquid crystal panels 203, 204, 205 to cool the liquid crystal panels 203, 204, 205.

The lamp cooling fan 62 draws in air that has cooled the liquid crystal panels 203, 204, 205, and supplies the drawn air to the lamp 201 to cool the lamp 201. The power source cooling fan 63 draws in air that has cooled the liquid crystal panels 203, 204, 205, and supplies the drawn air to a power source section (not shown) to cool the power source section.

A dedicated air inlet for each of the fans may be formed in the vicinity of the lamp cooling fan 62 and the power source cooling fan 63. In the modification, external air through the dedicated air inlets as well as the air from the side of the liquid crystal panels 203, 204, 205 are drawn in by the lamp cooling fan 62 and the power source cooling fan 63, and are supplied to the lamp 201 and the power source section.

The exhaust fan 64 is disposed near the air outlet 104. The exhaust fan 64 draws in warm air that has cooled e.g. the liquid crystal panels 203, 204, 205, the lamp 201, and the power source section, and discharges the warm air to the outside of the projector through the air outlet 104.

The alert section 70 is constituted of a display element such as an LED and a speaker, and outputs various alerts relating to running of the projector such as an alert to prompt the user to exchange the filter cassette 40.

The control circuit section 80 is provided with a controller 801, a storage 802, an operation input section 803, a remote control receiver 804, a time measurer 805, an image signal input section 806, an image signal processor 807, a panel driver 808, a fan driver 809, a lamp driver 810, an alert driver 811, and a motor driver 812.

The operation input section 803 outputs an input signal to the controller 801 in response to manipulation of a button on an operating section (not shown). The remote control receiver 804 outputs an input signal to the controller 801 in response to manipulation of a button on a remote controller (not shown) . The time measurer 805 measures a time and outputs the measured time to the controller 801.

The image signal input section 806 includes various input terminals corresponding to various image signals such as RBG signals and a composite signal, and outputs an image signal inputted from an external device, to the image signal processor 807. The image signal processor 807 converts the image signal inputted from the image signal input section 806 into image signals of RGB which are displayable on the liquid crystal display panels 203, 204, 205; and outputs the converted image signals to the panel driver 808. The panel driver 808 drives the liquid crystal panels 203, 204, 205 in accordance with the inputted image signals and a control signal from the controller 801.

The fan driver 809 drives the panel cooling fan 61, the lamp cooling fan 62, the power source cooling fan 63, and the exhaust fan 64 in accordance with a control signal from the controller 801. The lamp driver 810 drives the lamp 201 in accordance with a control signal from the controller 801.

The alert driver 811 drives the LED and the speaker of the alert section 70 in accordance with a control signal from the controller 801. The motor driver 812 drives the motor 506 in accordance with a control signal from the controller 801.

The storage 802 is constituted of an RAM, an ROM, and the like. A control program for providing a control function to the controller 801 is stored in the storage 802. The controller 801 is provided with a CPU to control various parts of the control circuit section 80 in accordance with the control program.

The clog sensor 90 outputs a clog signal corresponding to a degree of clogging of the filter 402 to the controller 801. The clog sensor 90 is constituted of e.g. an air flow rate sensor. The air flow rate sensor is disposed e.g. downstream of the intake port 401. When clogging of the filter 402 progresses, the flow rate of air passing through the intake port 401 is lowered. The air flow rate sensor outputs a detection voltage corresponding to the air flow rate, as a clog detection signal.

In this embodiment, when running of the projector is started, each of the cooling fans 61, 62, 63 is driven, and air is started to be drawn into the cabinet 10. When the projector is run, a degree of clogging of the filter 402 is detected, and when clogging of the filter 402 is detected, the cleaning mechanism 50 automatically cleans the filter 402.

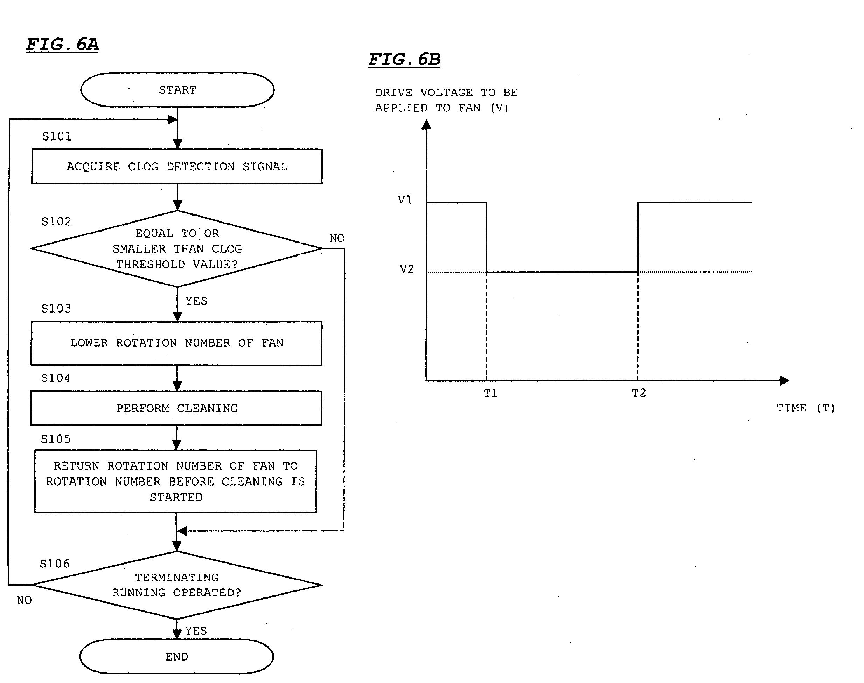

FIGS. 6A and 6B are diagrams for describing automatic cleaning control for automatically cleaning the filter 402. FIG. 6A is a diagram showing a process flow of automatic cleaning control. FIG. 6B is a diagram showing how a drive voltage is applied to the panel cooling fan 61 in the case where automatic cleaning control is executed.

Referring to FIG. 6A, the controller 801 acquires a clog detection signal (a detection voltage) from the clog sensor 90 (S101) . Then, the controller 801 compares between the acquired clog detection signal and a predetermined clog threshold value (S102).

If the filter 402 is not clogged, and the clog detection signal is larger than the clog threshold value (S102: NO), the controller 801 repeats a series of operations of acquiring a clog detection signal, and comparing between the acquired clog detection signal and the clog threshold value until an operation of terminating the running of the projector is performed, and the running is terminated (S106:YES).

If, on the other hand, the filter 402 is clogged, and the acquired clog detection signal is not larger than the clog threshold value (S102:YES), the controller 801 causes the cleaning mechanism 50 to start cleaning the filter 402.

Firstly, as shown in FIG. 6B, the controller 801 controls the fan driver 809 to lower a drive voltage (from voltage V1 to voltage V2) to be applied to the panel cooling fan 61 at a cleaning start timing T1 to lower the rotation number of the panel cooling fan 61 (S103). As a result of the above operation, the air intake rate through the air inlet 103 is lowered, and the air flow rate of air passing through the filter 402 is lowered in accordance with the lowering of the air intake rate.

Then, the controller 801 drives the motor 506 of the cleaning mechanism 50 to remove the dust adhered to the air intake surface 402a of the filter 402 by the rotary brush 501 (S104). At the dust removal operation, since the air flow rate of air passing through the filter 402 is small, a force of attracting dust to the filter 402 by the air intake operation is also weakened. Accordingly, dust adhered to the filter 402 is easily scraped off by the rotary brush 501. When the filter 402 is cleaned, clogging of the filter 402 is eliminated.

When cleaning of the filter 402 is completed, as shown in FIG. 6B, the controller 801 controls the fan driver 809 to increase the drive voltage (from voltage V2 to voltage V1) to be applied to the panel cooling fan 61 at a cleaning end timing T2 to return the rotation number of the panel cooling fan 61 to the rotation number before cleaning is started (S105). As a result of the above operation, the air intake rate through the air inlet 103 is increased. At this time, since clogging of the filter 402 has been eliminated, the air intake rate becomes larger than that before cleaning of the filter 402 is started.

If the controller 801 determines that an operation of terminating the running of the projector has been performed in Step S106 (S106:YES), the process is ended.

As described above, in this embodiment, the filter 402 is automatically cleaned by the cleaning mechanism 50 when clogging of the filter 402 is detected. Accordingly, there is no need of cleaning the filter 402 by the user. Further, since cleaning of the filter 402 is performed in a state that the projector is continued to be run, the user does not have to interrupt use of the projector. Accordingly, the embodiment is advantageous in enhancing usability of the projector.

Further, in this embodiment, since the air intake rate through the air inlet 103 is lowered during cleaning of the filter 402, the attraction force exerted on the filter 402 is decreased, which makes it easy to remove the dust adhered to the filter 402. Accordingly, it is possible to satisfactorily remove the dust adhered to the filter 402 by the cleaning mechanism 50.

Furthermore, in this embodiment, although the air intake rate is lowered, the air intake operations by the panel cooling fan 61, the lamp cooling fan 62, the power source cooling fan 63 are continued during cleaning of the filter 402. Thus, since cooling of the heat generating members such as the liquid crystal panels 203, 204, 205 is continued, it is possible to suppress overheating of the heat generating members.

In this embodiment, out of the three cooling fans 61, 62, 63, the air intake operation of the panel cooling fan 61 which directly communicates with the intake port 401 i.e. the air inlet 103 greatly contributes to the air intake rate through the air inlet 103. Accordingly, in this embodiment, only the rotation number of the panel cooling fan 61 is lowered in cleaning the filter 402. Alternatively, however, not only the rotation number of the panel cooling fan 61, but also the rotation numbers of the lamp cooling fan 62 and the power source cooling fan 63 may also be lowered, as necessary. Further alternatively, the rotation number of the exhaust fan 64 may also be lowered in accordance with the lowering of the rotation number of the panel cooling fan 61. Since lowering the rotation number of the exhaust fan 64 increases the inner pressure of the cabinet 10, the air intake rate is resultantly lowered.

### <Modification>

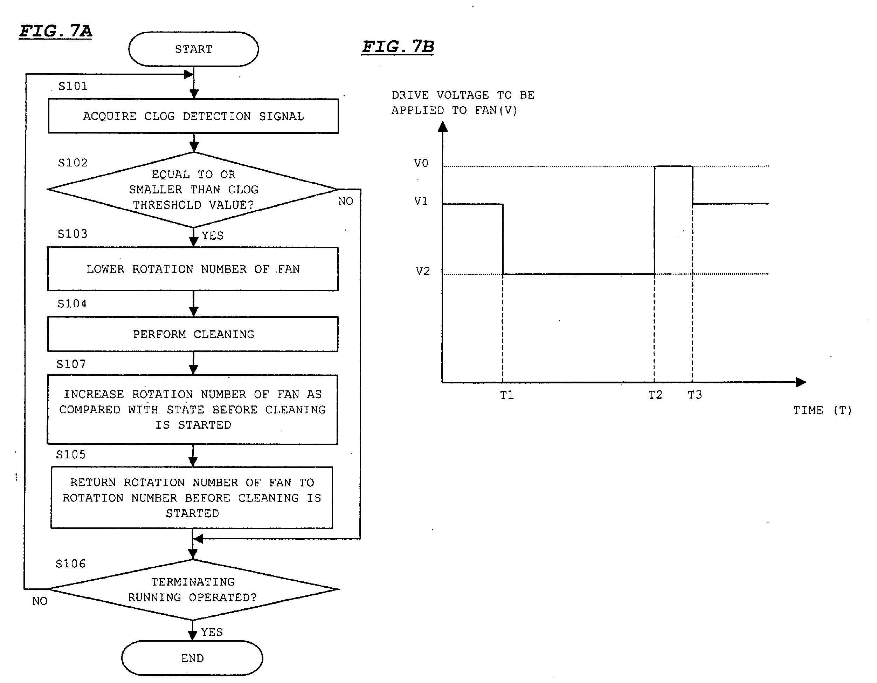

FIG. 7A and FIG. 7B are diagrams for describing automatic cleaning control of a filter as a modification. FIG. 7A is a diagram showing a process flow of automatic cleaning control. FIG. 7B is a diagram showing how a drive voltage is applied to the panel cooling fan 61 in the case where automatic cleaning control is executed.

In this modification, Step S107 is added to the control process shown in FIG. 6A. Specifically, in this modification, when cleaning of the filter 402 is completed, as shown in FIG. 7B, the controller 801 controls the fan driver 809 to increase a drive voltage (from voltage V2 to voltage V0) to be applied to the panel cooling fan 61 to be larger than the drive voltage before cleaning is started, at a cleaning end timing T2, to increase the rotation number of the panel cooling fan 61 to be larger than the rotation number before cleaning is started (S107). As a result of the above operation, the air intake rate through the air inlet 103 is increased to be larger than the air intake rate in a state that the rotation number of the panel cooling fan 61 is returned to the rotation number before cleaning is started.

Since the air intake rate is lowered during cleaning of the filter 402, the temperatures of the liquid crystal panels 203, 204, 205 may be increased to be larger than the temperatures before cleaning is started. However, increasing the air intake rate after cleaning of the filter 402 is completed as described above enables to quickly lower the temperatures of the liquid crystal panels 203, 204, 205.

Upon lapse of a predetermined time after increasing the rotation number of the panel cooling fan 61 (see the timing T3 in FIG. 7B), the controller 801 controls the fan driver 809 to return the rotation number of the panel cooling fan 61 to the rotation number before cleaning is started (S105).

Although the rotation numbers of the lamp cooling fan 62 and the power source cooling fan 63 are kept unchanged during the cleaning operation, the air intake rate through the air inlet 103 is lowered. As a result, the air flow rate to the lamp 201 and the power source section may be lowered to some extent. In view of this, after cleaning is completed, it is preferable to increase the rotation numbers of the lamp cooling fan 62 and the power source cooling fan 63 in accordance with an increase in the rotation number of the panel cooling fan 61.

### <Other modifications>

The embodiment of the invention has been described as above. The invention is not limited to the foregoing embodiment, and the embodiment of the invention may be modified in various ways other than the above.

For instance, in the embodiment, the projector is configured to clean the filter 402, based on a detection result that the filter 402 is clogged. Alternatively, the projector may be configured to clean the filter 402 when a running time of the projector has reached a predetermined time.

Further, in the embodiment, during cleaning of the filter 402, a drive voltage to be applied to the panel cooling fan 61 is set to a fixed value, and the rotation number of the panel cooling fan 61 is substantially kept constant. However, in the case where the rotation number of the panel cooling fan 61 is set to a fixed value, the air intake rate may be increased, as the dust adhered to the filter 402 is reduced as a result of cleaning the filter 402. In view of this, the rotation number of the panel cooling fan 61 may be sequentially lowered or stepwise lowered, as cleaning progresses. Thus, gradually lowering the rotation number as cleaning progresses eliminates the need of greatly lowering the rotation number at an initial stage of starting the cleaning. This enables to maximally suppress lowering in the air intake rate. Thus, it is possible to maximally suppress a temperature rise of the heat generating members such as the liquid crystal panels 203, 204, 205 during cleaning of the filter 402.

Furthermore, in the embodiment, the projector is configured to start cleaning the filter 402 immediately after a clog detection signal is equal to or smaller than the clog threshold value. Alternatively, the projector may be configured such that each time a clog detection signal is equal to or smaller than the clog threshold value, the rotation number of the panel cooling fan 61 is increased (the air intake rate is increased), and cleaning of the filter 402 is started for the first time when a clog detection signal is equal to or smaller than the clog threshold value after the rotation number of the panel cooling fan 61 has reached a predetermined upper limit rotation number. In the modification, in cleaning the filter 402, the rotation number of the panel cooling fan 61 is set to a rotation number smaller than the initial rotation number (the rotation number before the rotation number is gradually increased in accordance with a degree of clogging). Then, when cleaning of the filter 402 is completed, the rotation number of the panel cooling fan 61 is returned to the initial rotation number, in place of being set to the upper limit rotation number. The upper limit rotation number may be set, taking into account driving sounds of the panel cooling fan 61 or a temperature rise.

Further alternatively, in the case where the panel cooling fan 61 is constituted of plural fans, the rotation numbers of all the fans may be lowered, or the rotation number of a part of the fans may be lowered, or a part of the fans may be stopped to lower the air intake rate.

In the above modification, it is desirable to control the fans as follows, in the case where each of the fans cools a corresponding liquid crystal panel. Specifically, in the case where the rotation numbers of all the fans are lowered, it is desirable to lower the rotation number of a fan corresponding to a liquid crystal panel whose heat generation amount is smaller. On the other hand, in the case where the rotation number of a part of fans is lowered, or a part of the fans is stopped, it is desirable to lower the rotation number of a fan corresponding to a liquid crystal panel whose heat generation amount is smaller, or stop a fan corresponding to a liquid crystal panel whose heat generating amount is smaller.

Further, in the above modification, the projector is configured such that upon lapse of a predetermined time, the rotation number of the panel cooling fan 61, whose rotation number has been increased to be larger than the rotation number before cleaning of the filter 402 is started, is returned to the rotation number before cleaning of the filter 402 is started. Alternatively, the projector may be configured such that upon returning the temperatures of the liquid crystal panels 203, 204, 205 to the temperatures before cleaning is started, a temperature sensor may detect temperatures of the liquid crystal panels 203, 204, 205, and the rotation number of the panel cooling fan 61 may be returned to the rotation number before cleaning is started.

Further, in the embodiment, an air flow rate sensor is used as the clog sensor 90. Alternatively, a temperature sensor may be used as the clog sensor. In the modification, for instance, the temperature sensor is operable to measure temperatures of the liquid crystal panels 203, 204, 205; and the lamp 201. When the filter 402 is clogged and the air intake rate is lowered, the cooling performances of the panel cooling fan 61 and the lamp cooling fan 62 are lowered, which may increase a temperature to be measured by the temperature sensor. Then, the temperature sensor outputs a detection signal (a detection voltage) corresponding to the measured temperature to the controller 801.

Further, in the embodiment, a projector is described as an example of the invention. Alternatively, the invention may be applied to other electrical apparatus having a filter, such as an air conditioner and an air cleaner.

The embodiment of the invention may be changed or modified in various ways as necessary.

## Claims

1. An electrical apparatus, comprising:
an air intake device which draws air into an apparatus body (10);
a controller (801) adapted to control the air intake device;
a filter (402) adapted to remove unwanted matter from the air drawn into the apparatus body (10); and
a removing device (50) adapted to remove the unwanted matter adhered to the filter (402), wherein
the controller (801) is further adapted to control the air intake device to lower an air intake rate of the filter (402) when the removing device (50) is operated, **characterized in that**:
the controller (801) is further adapted to control the air intake device to increase the air intake rate into the apparatus body (10) to be larger than the air intake rate before the operation of the removing device (50) is started, after the operation of the removing device (50) is completed.

2. The electrical apparatus according to claim 1, **characterized in that**:
the air intake device includes an intake fan (61, 62, 63), and
the controller (801) is further adapted to control the air intake device to lower the rotation number of the intake fan (61, 62, 63) when the removing device (50) is operated.

3. The electrical apparatus according to claim 1 or 2, **characterized in that**:
the air intake device is adapted to supply the drawn air to a heat generating member (203, 204, 205) disposed in the apparatus body (10) to cool the heat generating member (203, 204, 205).

4. The electrical apparatus according to any of claims 1 to 3, **characterized in that**:
the air intake device includes an intake fan (61, 62, 63), and
the controller (801) is further adapted to control the air intake device to increase the rotation number of the intake fan (61, 62, 63) to be larger than the rotation number before the operation of the removing device (50) is started, after the operation of the removing device (50) is completed.

5. A projection display device comprising the electrical apparatus of any one of claims 1 to 4.

6. An air conditioner device comprising the electrical apparatus of any one of claims 1 to 4.

7. An air cleaner device comprising the electrical apparatus of any one of claims 1 to 4.

## Patentansprüche

1. Elektrische Vorrichtung, die Folgendes umfasst:
eine Lufteinsaugvorrichtung, die Luft in einen Vorrichtungskörper (10) einsaugt;
eine Steuerung (801), die zum Steuern der Lufteinsaugvorrichtung eingerichtet ist;
ein Filter (402), das zum Entfernen unerwünschter Substanz aus der Luft, die in den Vorrichtungskörper (10) eingesaugt wird, eingerichtet ist; und
eine Entfernungsvorrichtung (50), die zum Entfernen der unerwünschten Substanz, die an dem Filter (402) anhaftet, eingerichtet ist, wobei
die Steuerung (801) weiter eingerichtet ist, die Lufteinsaugvorrichtung zu steuern, um eine Lufteinsaugrate des Filters (402) zu verringern, wenn die Entfernungsvorrichtung (50) betrieben wird, **dadurch gekennzeichnet, dass**:
die Steuerung (801) weiter eingerichtet ist, die Lufteinsaugvorrichtung zu steuern, um die Lufteinsaugrate in den Vorrichtungskörper (10) zu erhöhen, sodass sie größer ist als die Lufteinsaugrate, bevor der Betrieb der Entfernungsvorrichtung (50) begonnen wird, nachdem der Betrieb der Entfernungsvorrichtung (50) beendet ist.

2. Elektrische Vorrichtung gemäß Anspruch 1, **dadurch gekennzeichnet, dass**:
die Lufteinsaugvorrichtung ein Einsauggebläse (61, 62, 63) einschließt und
die Steuerung (801) weiter eingerichtet ist, die Lufteinsaugvorrichtung zum Verringern der Rotationszahl des Einsauggebläses (61, 62, 63) zu steuern, wenn die Entfernungsvorrichtung (50) betrieben wird.

3. Elektrische Vorrichtung gemäß Anspruch 1 oder 2, **dadurch gekennzeichnet, dass**:
die Lufteinsaugvorrichtung eingerichtet ist, die eingesaugte Luft einem Wärmeerzeugungselement (203, 204, 205) zuzuführen, das in dem Vorrichtungskörper (10) angeordnet ist, um das Wärmeerzeugungselement (203, 204, 205) zu kühlen.

4. Elektrische Vorrichtung gemäß einem der Ansprüche 1 bis 3, **dadurch gekennzeichnet, dass**:
die Lufteinsaugvorrichtung ein Einsauggebläse (61, 62, 63) einschließt und
die Steuerung (801) weiter eingerichtet ist, die Lufteinsaugvorrichtung zum Erhöhen der Rotationszahl des Einsauggebläses (61, 62, 63) zu steuern, sodass sie größer als die Rotationszahl ist, bevor der Betrieb der Entfernungsvorrichtung (50) begonnen wird, nachdem der Betrieb der Entfernungsvorrichtung (50) beendet ist.

5. Projektionsanzeigevorrichtung, welche die elektrische Vorrichtung nach einem der Ansprüche 1 bis 4 umfasst.

6. Klimatisierungsvorrichtung, welche die elektrische Vorrichtung nach einem der Ansprüche 1 bis 4 umfasst.

7. Luftreinigungsvorrichtung, welche die elektrische Vorrichtung nach einem der Ansprüche 1 bis 4 umfasst.

## Revendications

1. Appareil électrique, comprenant :
un dispositif d'admission d'air qui aspire de l'air dans un coffret d'appareil (10) ;
une unité de commande (801) adaptée de manière à commander le dispositif d'admission d'air ;
un filtre (402) adapté de manière à éliminer des matières indésirables de l'air aspiré dans le coffret d'appareil (10) ; et
un dispositif d'élimination (50) destiné à éliminer les matières indésirables adhérant sur le filtre (402), dans lequel
l'unité de commande (801) est, en outre, adaptée afin de commander le dispositif d'admission d'air de manière à réduire un débit d'admission d'air du filtre (402) lorsque le dispositif d'élimination (50) est activé, **caractérisé en ce que** :
l'unité de commande (801) est, en outre, adaptée afin de commander le dispositif d'admission d'air de manière à augmenter le débit d'admission d'air dans le coffret d'appareil (10) afin qu'il soit supérieur, après que le fonctionnement du dispositif d'élimination (50) a été arrêté, au débit d'admission d'air avant que le fonctionnement du dispositif d'élimination (50) soit initié.

2. Appareil électrique selon la revendication 1, **caractérisé en ce que** :
le dispositif d'admission d'air comporte un ventilateur d'admission (61, 62, 63), et
l'unité de commande (801) est, en outre, adaptée afin de commander le dispositif d'admission d'air de manière à réduire la vitesse de rotation du ventilateur d'admission (61, 62, 63) lorsque le dispositif d'élimination (50) est activé.

3. Appareil électrique selon la revendication 1 ou 2, **caractérisé en ce que** :
le dispositif d'admission d'air est adapté afin de délivrer l'air aspiré à un élément générateur de chaleur (203, 204, 205) disposé dans le coffret d'appareil (10) de manière à refroidir l'élément générateur de chaleur (203, 204, 205).

4. Appareil électrique selon l'une quelconque des revendications 1 à 3, **caractérisé en ce que** :
le dispositif d'admission d'air comporte un ventilateur d'admission (61, 62, 63), et l'unité de commande (801) est, en outre, adaptée afin de commander le dispositif d'admission d'air de manière à augmenter la vitesse de rotation du ventilateur d'admission (61, 62, 63) afin qu'elle soit supérieure, après que le fonctionnement du dispositif d'élimination (50) a été arrêté, à la vitesse de rotation avant que le fonctionnement du dispositif d'élimination (50) soit initié.

5. Dispositif d'affichage par projection comprenant l'appareil électrique selon l'une quelconque des revendications 1 à 4.

6. Dispositif formant conditionneur d'air comprenant un appareil électrique selon l'une quelconque des revendications 1 à 4.

7. Dispositif formant filtre à air comprenant l'appareil électrique selon l'une quelconque des revendications 1 à 4.
